# EUROPÄISCHE PATENTSCHRIFT

(11) **EP 2 223 900 B1**
(45) Veröffentlichungstag und Bekanntmachung des Hinweises auf die Patenterteilung: **16.12.2020**
(21) Anmeldenummer: 10000393.8
(22) Anmeldetag: 18.01.2010
(51) Int. Cl.: C03C 17/02, F24C 15/10, H05B 3/74

(54) **Beschichtung für den Anzeigebereich von Glas- oder Glaskeramik-Scheiben, Verfahren zur Herstellung einer solchen Beschichtung und deren Verwendung**
Coating for the display area of glass or glass-ceramic panes, method for producing such a coating and its use
Revêtement pour la zone d'affichage de plaques de verre ou de vitrocéramiques, procédé de fabrication d'un tel revêtement et son utilisation

(30) Priorität: 27.02.2009 DE 102009010952
(43) Veröffentlichungstag der Anmeldung: 01.09.2010
(73) Patentinhaber: Schott AG, 55122 Mainz (DE)
(72) Erfinder: Striegler, Harald, 55437 Ockenheim (DE)

(56) Entgegenhaltungen:
- WO-A1-01/72087
- DE-A1- 10 313 630
- FR-A1- 2 894 328

## Beschreibung

Bei Kochflächen aus Glas oder Glaskeramik nimmt die Bedeutung der Gestaltung derjenigen Bereiche, in denen über Leuchtanzeigen (LEDs, LCDs etc.) Informationen übermittelt werden, stetig zu. Insbesondere bei Kochflächen aus farbloser oder geringfügig gefärbter, durchsichtiger Glaskeramik bieten sich im Gegensatz zu herkömmlichen Kochflächen aus gefärbter Glaskeramik ganz neue Möglichkeiten.

Die Kochflächen aus farbloser Glaskeramik tragen in der Regel eine farbige Unterseitenbeschichtung, die den Blick in das Innere der Kochmulde (auf Kabel, Metallträger u.a.) verhindert. Durch das einfache Aussparen der Unterseitenbeschichtung können unbeschichtete Bereiche für Anzeigen ("Displayfenster") erzeugt werden. Hinter den kleinen (wenige Millimeter) oder großen (z.B. 10 cm x 30 cm), unterschiedlich geformten Anzeigebereichen werden einzelne LEDs, sog. 7-Segment-Anzeigen oder ganze LCD-Bildschirme angeordnet, so dass nicht nur der Betriebszustand der Kochfläche angezeigt werden kann, sondern darüber hinaus auch über Infrarot- oder kapazitive Berührungsschalter z.B. Kochrezepte aufgerufen und angezeigt werden können.

Je nach Ausführung der Leuchtanzeige kann es jedoch erforderlich sein, dass die Kochfläche auch im Displaybereich eine Beschichtung trägt, z.B. um die Sicht auf elektronische Bauteile (Platinen etc.) einzuschränken. Qualitativ besonders hochwertige Beschichtungen für Displaybereiche sind z.B. aus EP 1 867 613 A1 bekannt. Die dort vorgeschlagenen Edelmetallschichten sind in ihrer Transmission auf das sichtbare Spektrum des Lichts abgestimmt und lassen daher sowohl die Anordnung roter, weißer oder andersfarbiger LEDs, als auch den Einsatz bunter LCD-Bildschirme zu. Ferner streuen sie das Licht kaum, wodurch die Leuchtanzeige sehr brillant und klar ist. Nachteilig sind jedoch die mit dem Edelmetallgehalt derartiger Schichten verbundenen hohen Herstellungskosten und die eingeschränkte Farbauswahl (erhältlich sind nur schwarz, braun, silber, gold oder kupfer).

Es sind aber auch preiswertere Displayschichten, die eine vielfältige Farbauswahl zulassen, am Markt erhältlich, bei denen Einschränkungen hinsichtlich der Anzeigequalität bewusst in Kauf genommen werden.

So werden beispielsweise in FR 2 885 995 A1 und WO 2007/066030 A1 für Kochflächen mit Displaybereichen Beschichtungen auf der Basis von Filmbildnern wie Siliconen, Polyimiden oder Polyamiden vorgeschlagen. Die Beschichtung im Displaybereich ("Displayschicht") wird dabei in Aussparungen der ersten, farbgebenden Schicht aufgetragen. Dabei ist ein Farbunterschied zwischen der Displayschicht und der umgebenden, farbgebenden Schicht erwünscht, um den Anzeigebereich hervorzuheben. Der Unterschied kann durch eine andere Reflexion der Displayschicht oder eine andere Pigmentierung erzeugt oder verstärkt werden.

Nachteilig an den in FR 2 885 995 A1 und WO 2007/066030 A1 genannten Displayschichten ist die geringe Kratzfestigkeit und die stärkere Streuung des Lichts der Anzeigeelemente (aufgrund der eingesetzten Pigmente mit Korngrößen im Mikrometerbereich). Die Prüfung der Kratzfestigkeit an einer kommerziell erhältlichen Kochfläche mit siliconbasierter Displayschicht ergab, dass eine senkrecht zur Schicht ausgerichtete, abgerundete Hartmetallspitze (Spitzenradius: 0,5 mm), die horizontal über die Displayschicht geführt wurde, bereits bei einer Belastung von weniger als 100 g eine Kratzspur erzeugte, die durch die Glaskeramik hindurch - also aus Benutzersicht - erkennbar war. Derartige Displayschichten erfordern daher ein vorsichtiges Hantieren sowohl bei der Herstellung, als auch bei der späteren Montage, um die Kosten durch verkratzte Displayschichten (Ausschuss) niedrig zu halten. Aus ästhetischen Gründen ist ferner der Farbunterschied zwischen Displayschicht und farbgebender Schicht nachteilig, denn zur Zeit sind Kochflächen erwünscht, die farblich einheitlich sind.

Gemäß JP 2003 086337 A können Displayschichten auch mit Alkylsilicatfarben (Sol-Gel-Farben) erzeugt werden. Gemäß dieser japanischen Schrift wird die Displayschicht auf Sol-Gel-Basis als erste Farblage vollflächig auf die Kochflächenunterseite aufgebracht und anschließend mit einer lichtundurchlässigen, schwarzen Farbschicht, die im Displaybereich ausgespart wird, hinterdruckt. Die Displayschicht enthält Effektpigmente und evtl. andere anorganische Zusätze. Durch die schwarze Hinterdruckung entfalten die Effektpigmente ihre irisierende Wirkung, so daß die schwarz hinterdruckten Bereiche eine andere Farbe haben als die nicht hinterdruckten Displaybereiche (die Kochfläche ist im zweilagig beschichteten Bereich z.B. metallisch grau und im einlagig beschichteten Bereich weiß).

Der Farbunterschied zwischen dem Displaybereich und dem übrigen Bereich kann gemäß JP 2003 297540 A dadurch gemindert werden, dass der Displaybereich pünktchenförmig mit der schwarzen Hinterdruckung versehen wird. Die Kochfläche hat dann immerhin einen annähernd einheitlichen Farbton. Die Displaybereiche sind aber nur noch für hinterleuchtende Anzeigen geeignet, jedoch unbrauchbar für z.B. 7-Segment-Anzeigen.

Ein wesentlicher Nachteil der in JP 2003 086337 A und JP 2003 297540 A beschriebenen Displayschichten ist die Abhängigkeit der Farbe der umgebenden Bereiche (Heißbereich, Kaltbereich etc.) von der Farbe der Displayschicht. Da die Displayschicht als erste Schicht vollflächig auf die ganze Kochfläche aufgetragen wird, bestimmt die Farbe der Displayschicht immer auch die Farbe der übrigen Bereiche der Kochfläche. Die Freiheit zur Gestaltung einer Kochfläche wird dadurch erheblich eingeschränkt.

FR 2 894 328 A1 offenbart eine spezielle Glaskeramikplatte mit einer speziellen Beschichtung, ein spezielles Verfahren und eine spezielle Vorrichtung zur Herstellung der Glaskeramikplatte und ein spezielles Kochgerät, welches die spezielle Glaskeramikplatte umfasst.

Es stellt sich daher die Aufgabe, für Gläser oder Glaskeramiken farbige, transparente Displayschichten bereitzustellen, wobei
- der Farbton der Beschichtung unabhängig von dem Farbton der übrigen Bereiche des Glases oder der Glaskeramik ist,
   und die Beschichtung
- ausreichend transparent für Leuchtanzeigen,
- preiswerter als Edelmetallschichten,
- kratzfester als herkömmliche Schichten ist und
- die Sicht in das Innere, z.B. der Kochmulde ausreichend einschränkt.

Besonders angestrebt wird dabei die Bereitstellung von Displayschichten, deren Farbton nahezu gleich ist mit dem Farbton des umgebenden Bereichs. In besonderen Fällen muss die Beschichtung ferner für kapazitive Berührungsschalter oder Infrarot-Berührungsschalter geeignet sein.

Die Lösung dieser komplexen Aufgabe gelingt mit einem Beschichtungssystem, umfassend:
eine transparente Beschichtung für Anzeigebereiche von flächig beschichteten Glas- oder Glaskeramik-Scheiben, und
eine flächige, nicht-transparente Beschichtung;
wobei die transparente Beschichtung durch folgende Verfahrensschritte erhältlich ist:
   i) Aufbringen dertransparenten Beschichtung in Aussparungen der flächigen, nicht-transparenten Beschichtung als Sol-Gel-Farbe mit Alkylsilicaten als Filmbildner, und
   ii) Bilden der transparenten Beschichtung durch eine thermische Behandlung der aufgebrachten Farbe bei kleiner oder gleich 200 °C;
   wobei die aus dem Filmbildner durch thermische Behandlung entstandene Beschichtung über die reaktiven Gruppen der Alkylsilicate vernetzt ist und direkt an das Silicium gebundene, organische, nicht hydrolysierbare Reste aufweist.

Gemäß einer Ausführungsform werden die Alkylsilicatfarben in Bereiche, in denen die blickdichte Unterseitenbeschichtung ausgespart ist, aufgebracht. Dadurch, dass die Kochfläche zunächst mit einer blickdichten Beschichtung versehen wird, wie sie in DE 100 14 373 C2 oder DE 10 2005 018 246 A1 beschrieben ist, und die Beschichtung ausgesparte Bereiche ("Displayfenster") aufweist, in die in einem separaten Beschichtungsschritt eine Alkylsilicat-Farbe aufgebracht wird, können die Farbtöne der blickdichten Beschichtung und der Displayschicht vollkommen unabhängig voneinander gewählt werden. Weil die Displayschicht auf Basis von Alkylsilicaten keine Edelmetalle enthalten muss, ist sie wesentlich kostengünstiger als die aus EP 1 867 613 A1 bekannte Lösung. Aufgrund ihres glasartigen Gefüges sind die Alkylsilicat-Schichten ferner kratzbeständiger als die herkömmlichen organischen Schichten, die in FR 2 885 995 A1 oder WO 2007/066030 A1 genannt werden, insbesondere dann, wenn der Einbrand bei 200 °C oder niedrigeren Temperaturen erfolgt.

Die Farbe kann in den ausgesparten Bereich durch Sprühen, Tauchen, Gießen, Aufstreichen, Siebdrucken, Tampondruck oder andere Stempelverfahren aufgetragen werden. Das Siebdruckverfahren bietet den Vorteil, dass über die Gewebestärke die Dicke der Displayschicht genau definiert werden kann, so dass im Fertigungsprozess mit hoher Genauigkeit konstante Schichtdicken auch über weite, flächige Bereiche erzeugt werden können. Dieser Aspekt ist bei Displayschichten vor besonderer Bedeutung, weil dadurch die Transmission für das Licht der Leuchtelemente definiert einstellbar ist und über den gesamten Displaybereich konstant bleibt. Geeignete Schichtdicken liegen im Bereich von 2 - 20 µm, bevorzugt bei 5 - 12 µm. Bei niedrigeren Schichtdicken als 2 µm sind die Displayschichten nicht mehr ausreichend blickdicht und ihre Kratzfestigkeit liegt unter 100 g. Bei Schichtdicken über 20 µm ist die Transmission der Displayschichten für sichtbares Licht zu gering und Streueffekte nehmen stark zu, so dass die Leuchtanzeige nicht mehr deutlich genug erkannt werden kann. Auch können bei hohen Schichtdicken Haftfestigkeitsprobleme auftreten.

Mit dem Siebdruckverfahren ist für den gezielten Auftrag der Farbe in die ausgesparten Bereiche auch keine aufwendige Maskierungstechnologie notwendig (wie etwa beim Sprühen). Und selbst wenn die Beschichtung des Bereichs um den Displaybereich herum sehr dick ist (bis zu 60 µm), so dass die Displayschicht in eine Vertiefung gedruckt werden muss, treten trotz der zu überwindenden Stufe überraschenderweise keine Probleme bei der Beschichtung des ausgesparten Displaybereichs auf.

Insbesondere, wenn die Displayschicht etwa 1 - 5 mm überlappend auf die Beschichtung im übrigen Bereich gedruckt wird, treten keine unbenetzten Stellen an den Rändern auf, also an den Kanten, wo die Beschichtung des umgebenden Bereichs endet.

Der überlappende Druck der Displayschicht auf die Beschichtung des umgebenden Bereichs ist vorteilhaft. Denn aufgrund vorhandener Fertigungstoleranzen beträgt die Genauigkeit, mit der die Ausrichtung der Schablone zum Druck der Displayschicht relativ zu allen anderen bereits gedruckten Schichten (einschließlich Oberseitendekor) erfolgt, üblicherweise 0,3 - 1,0 mm. Ohne Überlappung mit der umgebenden Unterseitenbeschichtung könnten daher aufgrund der Fertigungstoleranzen durch den Versatz der Schablone Bereiche des Displayfensters unbeschichtet bleiben. Wenn jedoch eine ausreichend große Überlappung der Displayschicht mit der umgebenden Beschichtung vorgesehen ist, kann sichergestellt werden, dass der gesamte Displaybereich stets vollständig von der Displayschicht ausgefüllt wird.

Eine wichtige Voraussetzung in diesem Zusammenhang ist, dass die Displayschicht auf der umgebenden Beschichtung ausreichend haftet. Bei Displayschichten auf der Basis von Alkylsilicaten zeigte sich, dass ein besonders guter Verbund mit anderen Alkylsilicatfarben, insbesondere der in DE 103 55 160 B4 und DE 10 2005 018 246 A1 genannten Systeme erreicht wird. Die hohe Haftfestigkeit der Schichten untereinander beruht vermutlich auf ihrer chemischen und strukturellen Ähnlichkeit. Die erfindungsgemäßen Displayschichten auf der Basis von Alkylsilicaten sind auch auf Edelmetallschichten, wie sie in DE 10 2005 046 570 A1 oder EP 1 867 613 A1 diskutiert werden, ausreichend haftfest.

Haftungsprobleme treten dagegen auf, wenn die umgebende Schicht als Filmbildner überwiegend (mehr als 50 Gew.-% bezogen auf die trockene Schicht) Silicone (Polysiloxane) enthält. In diesem Fall kann die interlaminare Haftung verbessert werden, wenn der Displayschicht 0,5 bis 10 Gew.-%, in besonderen Fällen auch bis zu 30 Gew.-%, Silicon zugesetzt werden. Bei höheren Silicongehalten als 30 Gew.-% sinkt die Kratzfestigkeit unter 100 g. Durch das zugesetzte Silicon erhöht sich auch die Dichtigkeit der Displaybeschichtung gegenüber Wasser, Öl und anderen Flüssigkeiten, wodurch die Neigung der Displayschicht, bei Kontakt mit Flüssigkeiten Flecken auszubilden, abnimmt. Die Haftfestigkeit kann mit dem sog. "TESA-Test" geprüft werden, wobei auf die Beschichtung ein Streifen transparenten Klebefilms angerieben und dann ruckartig abgerissen wird (Tesafilm Typ 104, Beiersdorf AG). Wenn die Beschichtung mit dem Klebestreifen von der Glaskeramik nicht abgelöst werden kann, so daß aus der Sicht des Benutzers kein Schaden erkennbar ist, dann ist die Unterseitenbeschichtung ausreichend haftfest.

Als Filmbildner eignen sich Alkylsilicate wie z.B. Orthokieselsäure, Polykieselsäuren, Ester der Orthokieselsäure oder Ester von Polykieselsäuren mit einem oder mehreren organischen, nicht hydrolisierbaren Resten, die in organischen Lösungsmitteln löslich sind und durch Reaktion mit der Luftfeuchtigkeit aushärten. Besonders geeignet sind Sole, die durch teilweise Hydrolyse und Polykondensation von Silanen mit Organosilanen hergestellt werden können, gemäß DE 043 38 360 A1 und EP 1 611 067 B1, z.B. aus Methyltriethoxysilan und Tetraethoxysilan.

Als Lösungsmittel eignen sich, insbesondere, um eine siebdruckfähige Farbpaste herzustellen, schwerflüchtige Lösungsmittel wie z.B. Butylcarbitolacetat, Terpineol, Methoxypropanol (VD = 38), Butylglycol (VD = 165) oder Butyldiglycol (VD > 1200) mit einer Verdunstungszahl (VD) über 35 und einem Siedepunkt über 120 °C (VD_{Diethylether} = 1). Die schwerflüchtigen, hochsiedenden Lösungsmittel haben zum einen die Aufgabe, die Farbe im Sieb flüssig, d.h., verarbeitbar, zu halten. Zum anderen ist es wichtig, dass während der Verarbeitung die Konzentration der Farbe konstant bleibt, damit reproduzierbare Schichtdicken und daraus resultierend eine konstante Transmission der Beschichtung erreicht werden können. Eine konstante Konzentration der Farbe während des Verarbeitungsprozesses kann nur mit ausreichenden Anteilen an schwerflüchtigen Lösungsmitteln in der Farbe erreicht werden, weil leichtflüchtige (VD < 10) oder mittelflüchtige (VD = 10 - 35) Lösungsmittel bereits während des Druckens der Farbe verdunsten würden und sich dadurch die Konzentration der Farbe unzulässig verändern würde.

Die Versuche zeigten aber auch, dass leichtflüchtige Lösungsmittel wie Ethanol (VD = 8,3) oder mittelflüchtige Lösungsmittel wie Butylacetat (VD = 11) in gewissen Mengen enthalten sein dürfen, ohne dass durch die Verdunstung des Lösungsmittels und die damit verbundene Erhöhung der Konzentration während des Siebdruckprozesses unzulässig hohe Transmissionsänderungen auftreten. Der Anteil an leichtflüchtigen Lösungsmitteln darf insbesondere nicht höher sein als der Anteil an schwerflüchtigen Lösungsmitteln. Die Lösung aus Filmbildner und Lösungsmittel, die auch als Sol bezeichnet wird, sollte zu 30 - 60 Gew.-% aus filmbildenden, vorkondensierten Organosilanen und zu 70 - 40 Gew.-% aus Lösungsmitteln bestehen.

Ein derartiges Sol ist nach der Trocknung oder dem Einbrand nahezu farblos. Um die Transmission der Beschichtung zu erniedrigen ist daher der Zusatz von Pigmenten notwendig. Geeignet sind Pigmente, die zumindest kurzzeitig (1 - 10 Minuten) bis 200 °C thermisch stabil sind. Höheren Temperaturen muss die Displayschicht normalerweise nicht widerstehen, zum einen, weil die unter ihr angeordneten 7-Segment-Anzeigen oder LCD-Bildschirme höhere Temperaturen nicht zulassen und derartige Displaybereiche daher im Kaltbereich der Kochfläche vorgesehen werden, zum anderen, weil in der Nähe der Displaybereiche üblicherweise Berührungsschalter angeordnet werden und die Kochfläche in dem Bereich der Schalter kälter als 60 °C sein muss, damit sich der Benutzer bei der Bedienung der Kochfläche nicht die Finger verbrennt.

Neben den thermisch sehr stabilen anorganischen Pigmenten sind daher auch organische Pigmente geeignet. Die Pigmente sollten wegen der gesetzlichen Bestimmungen für Elektro- und Elektronikgeräte kein Blei, sechswertiges Chrom (Cr^{+VI}), Cadmium oder Quecksilber enthalten. Geeignet sind anorganische Buntpigmente und Schwarzpigmente wie Eisenoxidpigmente, Chromoxidpigmente oder oxidische Mischphasenpigmente mit Rutil- oder Spinellstruktur und anorganische Weißpigmente (Oxide, Carbonate, Sulfide). Als Beispiele für geeignete Pigmente seien die Eisenoxidrot-Pigmente aus Hämatit (α-Fe₂O₃), Eisenoxidschwarz-Pigmente mit der ungefähren Zusammensetzung Fe₃O₄ sowie die Mischphasenpigmente Cobaltblau CoAlO₄, Zinkeisenbraun (Zn,Fe)FeO₄, Chromeisenbraun (Fe,Cr)₂O₄, Eisenmanganschwarz (Fe,Mn)(Fe,Mn)₂O₄, Spinellschwarz Cu(Cr,Fe)₂O₄ und auch Graphit sowie als Weißpigmente TiO₂ und ZrO₂ genannt.

Um spezielle Effekte bei der Farbgebung zu erzielen, können auch anorganische Glanzpigmente (Metalleffektpigmente, Perlglanzpigmente und Interferenzpigmente) eingesetzt werden. Als Metalleffektpigmente sind plättchenförmige Teilchen aus Aluminium-, Kupfer- oder Kupfer-Zink-Legierungen geeignet.

Als organische Pigmente können Azopigmente (z.B. Naphthol AS, Dipyrazolon), polycyclische Pigmente (z.B. Chinacridon, Perylen) oder Metallkomplexpigmente (z.B. Kupferphthalocyanin-Pigmente) verwendet werden.

Der mittlere Teilchendurchmesser der Pigmente liegt üblicherweise im Bereich von 1 - 25 µm (bevorzugt bei 5 - 10 µm). D90 sollte unter 40 µm (bevorzugt bei 6 - 15 µm), D50 unter 25 µm (bevorzugt bei 6 - 8 µm) und D10 unter 12 µm (bevorzugt bei 2 - 5 µm) liegen. Plättchenförmige Pigmente sollten eine maximale Kantenlänge von 60 - 100 µm (bevorzugt 5 - 10 µm) haben, damit die Farbpaste mit den Siebgewebeweiten 140 - 31 (entsprechend einer Maschenweite von 36 µm) oder 100 - 40 (entsprechend einer Maschenweite von 57 µm) problemlos gedruckt werden kann. Bei gröberen Pigmenten werden Schichten erhalten, die das sichtbare Licht zu stark streuen, so dass die Leuchtanzeige nicht mehr deutlich genug erkannt werden kann. Je feiner die Pigmente sind, umso geringer streut die Displayschicht das sichtbare Licht und umso klarer (schärfer) wird die Anzeige. Bei den genannten Korngrößen tritt üblicherweise eine Streuung von 5 - 40 % (Wellenlängenbereich: 400 - 800 nm) auf (s. EP 1 867 613 A1).

Bei der Verwendung von Pigmenten mit Korngrößen unterhalb von 1 µm kann die Streuung auf weniger als 5 % reduziert werden. Der Aufwand, der für die Dispergierung der Nanoteilchen und die Stabilisierung der Farbpaste erforderlich ist und die damit verbundenen Kosten stehen jedoch in keinem günstigen Verhältnis zu dem Gewinn an Anzeigequalität derart niedrigstreuender Schichten.

Der Pigmentanteil in der eingebrannten Beschichtung sollte bei 2 - 45 Gew.-%, bevorzugt bei 25 - 40 Gew.-% liegen. Bei einem niedrigeren Pigmentanteil als 2 Gew.-% ist die Transmission der Displayschicht zu hoch, so dass die Sicht in das Innere der Kochmulde nicht ausreichend verhindert wird. Bei einem höheren Pigmentanteil als 45 Gew.-% ist die Transmission der Displayschicht zu gering, so dass die Leuchtanzeigen nicht mehr ausreichend deutlich wahrgenommen werden können.

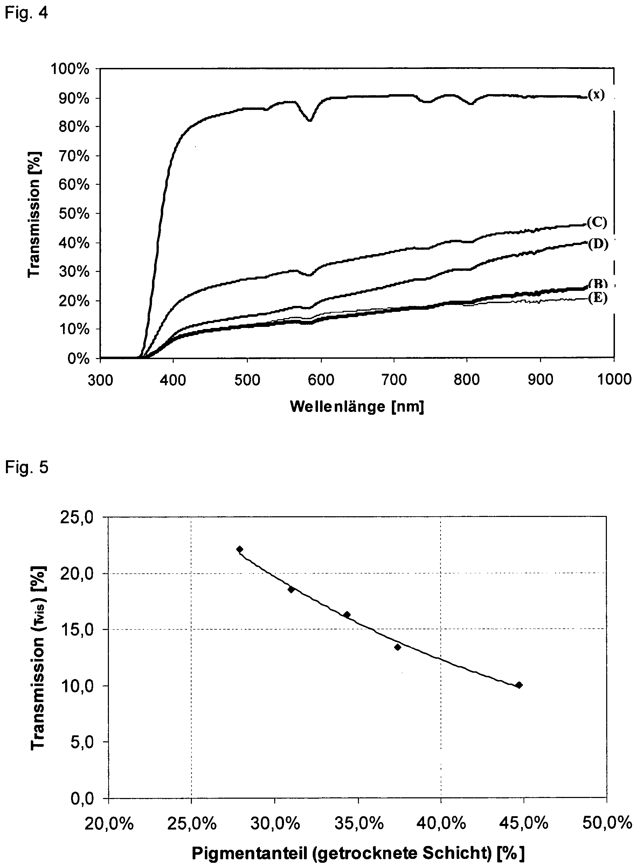

Mit den genannten Pigmentanteilen und Schichtdicken wird im Bereich des sichtbaren Lichts eine Transmission Tᵥᵢₛ von 10 - 40 %, insbesondere von 12 - 18 % erreicht (berechnet gemäß DIN EN 410 bei Lichtart D65). Der nach dem Lambert-Beerschen Gesetz zu erwartende exponentielle Zusammenhang zwischen Pigmentanteil in der getrockneten Displayschicht und der Transmission ist in Fig.5 beispielhaft für die Displayschicht mit der Zusammensetzung E (Pigmentanteil 37,4 %; Transmission 13,4 %) und variiertem Pigmentanteil dargestellt.

Da das pigmentierte Sol zu flüssig für die Siebdruckanwendung ist, muss die Viskosität durch Zusatz von Füllstoffen erhöht werden. Andernfalls würde die Farbe nach dem Fluten durch das Siebgewebe hindurchtropfen, und die Verarbeitung wäre unmöglich oder zumindest stark erschwert.

Geeignete Verdickungs- und Thixotropiermittel, die den Farbton und die Transmission der Druckfarbe nicht verändern, sind z.B. Polyacrylate, Polysiloxane (bei 20 °C feste Harze), pyrogene Kieselsäuren oder Cellulosederivate. Insbesondere Kieselsäuren sind zur Erhöhung der Viskosität geeignet (bei saurem Sol zersetzen sich Cellulosederivate und die Farbpaste wäre nur wenige Tage stabil). Der Anteil an Kieselsäure (bezogen auf die eingebrannte Schicht) sollte jedoch 15 Gew.-% nicht übersteigen, ideal ist der für Druckfarben ungewöhnlich hohe Anteil von 4 - 10 Gew.-%. Bei einem höheren Anteil als 15 Gew.-% Kieselsäure ist die Viskosität der Druckfarbe zu hoch, so daß kein geschlossener Film mehr erhalten wird, d.h., in der Displayschicht treten kleine, unbeschichtete Bereiche auf. An diesen Stellen würden die Leuchtelemente unverhältnismäßig hell durch die Kochfläche scheinen, wodurch der ästhetische Eindruck gestört würde. Bei einem niedrigeren Anteil als 1 Gew.-% ist die Viskosität der Farbe zu gering, so dass die Farbe durch das Siebgewebe tropft.

Um das Druckbild zu optimieren, können der Druckfarbe ferner Entschäumer, Netz- und Verlaufsmittel zugesetzt werden (z.B. 0,1 - 2 Gew.-% Polysiloxan mit einer Viskosität von 5000 - 50000 mPa · s).

Displayschichten mit demselben oder einem vergleichbaren Farbton wie der Beschichtung des umgebenden Bereichs werden erhalten, indem das gleiche Pigment oder (bei mehreren Pigmenten) die gleichen Pigmente wie in der umgebenden Schicht verwendet werden, das Verhältnis der Pigmente zueinander beibehalten wird und lediglich der Gesamtpigmentanteil (jeweils bezogen auf die getrocknete Schicht) reduziert wird von üblicherweise 42 - 46 Gew.-% in der umgebenden Schicht auf 25 - 90 %, insbesondere 60 - 85 % des ursprünglichen Wertes - entsprechend einem Gesamtpigmentgehalt der getrockneten Displayschicht von 25 - 39 Gew.-%. Dabei sind - je nach Farbe und Feinheit der Pigmente sowie dem verwendeten Siebgewebe - teils sehr unterschiedliche Gesamtpigmentgehalte in der Displayschicht notwendig, um die passende Transmission einzustellen.

Die Farbe für den Displaybereich kann jedoch nicht einfach durch Lösungsmittelzugabe zu der Farbe, die für den umgebenden Bereich eingesetzt wird, hergestellt werden. Die Viskosität der erhaltenen Farbe wäre zu gering und die Verarbeitung mittels Siebdruck unmöglich, weil die Farbe durch das Siebgewebe tropfen würde. Die Erniedrigung des Gesamtpigmentanteils muss vielmehr durch Erhöhung des Sol-Anteils und des Anteils an Verdickungs- oder Thixotropiermitteln (z.B. Kieselsäure) erfolgen, wobei die o.g. Grenzen eingehalten werden müssen.

So können z.B. zu den in DE 103 55 160 B4 beschriebenen, blickdichten Alkylsilicat-Schichten (deren Transmission Tᵥᵢₛ bei unter 2 % liegt) farblich vergleichbare Displayschichten hergestellt werden, die so transparent sind, dass eingeschaltete 7-Segmentanzeigen oder LCD-Bildschirme ausreichend hell hindurch scheinen und im ausgeschalteten Zustand ausreichend verdeckt werden.

Die erhaltene Druckfarbe kann wie bereits erwähnt mit Siebgewebe der Feinheit 140 - 31 oder 100 - 40 auf Glas- oder Glaskeramikplatten gedruckt werden.

Gröbere Gewebe sind nicht zu empfehlen, weil mit ihnen ein ungleichmäßiges Druckbild erhalten wird mit Schichtdickenschwankungen, die die Anzeigequalität erheblich beeinträchtigen. Die Beschichtung kann anschließend getrocknet und eingebrannt werden. Ziel der Trocknung ist es, die Lösungsmittel aus der Beschichtung zu entfernen. Die Trocknung kann bei Zimmertemperatur oder bei bis zu 200 °C erfolgen. In der Regel genügen je nach Temperatur zur Trocknung wenige Minuten bis einige Stunden, insbesondere 1 - 45 min bei 100 - 200 °C.

Durch den nachfolgenden Einbrand werden unter Abspaltung von Alkohol (i.d.R. Ethanol) und Wasser zwischen den Filmbildnermolekülen chemische Bindungen geknüpft, wobei sich in der Beschichtung ein Siliciumoxid-Netzwerk ausbildet. Durch den Einbrand wird die Beschichtung verdichtet und dadurch hart und kratzfest. Die Trocknung und der Einbrand können in einem Schritt erfolgen, z.B. durch thermische Behandlung der Beschichtung bei 200 °C für 45 min.

Die Kratzfestigkeit der Beschichtung ist am höchsten, wenn bei dem Einbrand eine möglichst vollständige Vernetzung zwischen den reaktiven Gruppen, insbesondere den Alkoxysilan- und den Hydroxy-Gruppen stattfindet, ohne dass die direkt an Silicium gebundenen, organischen Reste (z.B. Aryl- oder Alkylgruppen) thermisch abgespalten werden. Die Abspaltung dieser das Siliciumoxidgerüst modifizierenden, organischen Reste, die nicht für eine Kondensationsreaktion vorgesehen sind, findet üblicherweise erst bei über 200 °C (eher bei über 250 °C) statt. Bei dem Einbrand sollten daher 200 °C nicht überschritten werden, damit die Kratzfestigkeit der Displayschicht maximal ist. Die Kratzfestigkeit der erhaltenen Displayschichten beträgt nach dem eingangs beschriebenen Verfahren mindestens 100 g, in besonderen Fällen können auch 200 g erreicht werden.

Aufgrund der Reaktivität des Sols kann sich das glasartige Schichtgefüge natürlich auch - bei ausreichender Zeit - ohne Einbrand allein durch die Reaktion mit Wasser aus der Luft ausbilden. Aus Zeitgründen und um einen definierten Schichtaufbau zu erhalten, wird der Einbrand bei 150 - 200 °C und definierter Luftfeuchte jedoch bevorzugt.

Gemäß der Erfindung wird die transparente Beschichtung durch eine thermische Behandlung der aufgebrachten Farbe bei kleiner oder gleich 200 °C gebildet.

Wenn die unterseitig beschichtete Kochfläche für kapazitiv arbeitende Berührungsschalter (z.B. Touch-Control-Einheiten) geeignet sein soll, ist es erforderlich, dass die Alkylsilicatbeschichtung im Displaybereich elektrisch nicht leitfähig ist, d.h., dass der elektrische Flächenwiderstand der Displayschicht im Mega-, besser im Giga-Ohm-Bereich (bei über 10⁹ Ω/Quadrat) liegen muss. Erreicht wird die Eigenschaft dadurch, dass keine elektrisch leitfähigen Pigmente (z.B. Metallpulver, Aluminiumflakes, Graphit) in der Displayschicht verwendet werden oder dass zumindest der Anteil der elektrisch leitfähigen Stoffe in der Beschichtung auf eine so geringe Menge begrenzt wird, dass ein ausreichend hoher Flächenwiderstand sichergestellt ist (es sind z.B. bis zu 10 Gew.-% Graphit in der Displayschicht zulässig bei einer Schichtdicke von maximal 10 µm). Die elektrische Leitfähigkeit der Beschichtung kann bei Verwendung von Aluminiumflakes oder anderen elektrisch leitfähigen Pigmenten auch dadurch unterbunden werden, dass die Pigmente mit einer elektrisch nicht leitenden Schicht umgeben werden (z.B. mit Siliciumoxid gecoatete Aluminiumflakes).

Es zeigte sich auch, dass Displayschichten mit einer Transmission Tᵥᵢₛ im Bereich des sichtbaren Lichts von 20 - 40 % für Infrarot-Berührungsschalter geeignet sind. Die Transmission im Bereich des sichtbaren Lichts ist jedoch nur ein grobes Maß für die Eignung für IR-Sensoren. Entscheidend ist die Transmission der Displayschichten bei 940 nm (der Wellenlänge, bei der die IR-Sensoren arbeiten). Sie sollte bei mindestens 25 %, insbesondere im Bereich von 30 - 80 %, liegen. Je nach Pigmenttyp können daher auch Displayschichten mit einer Transmission im Bereich des sichtbaren Lichts Tᵥᵢₛ unter 20 % für IR-Sensoren geeignet sein (s. z.B. Beispiel 2, Tab.7, Zusammensetzung D).

Als Substratmaterial für das Beschichtungssystem eignen sich z.B. Glaskeramiken vom Typ Li₂O-Al₂O-SiO₂, insbesondere farblose Glaskeramik mit einer thermischen Ausdehnung von -10 · 10⁻⁷ K⁻¹ bis +30 · 10⁻⁷ K⁻¹ in dem Temperaturbereich 30 - 500 °C, deren bekannte Zusammensetzung u.a. in der nachstehenden Tabelle 1 angegeben ist:

**Tab. 1 Zusammensetzung geeigneter Glaskeramik-Substrate**

| Elementoxid | Glaskeramik-Zusammensetzung [Gew.-%] | | |
|---|---|---|---|
| SiO₂ | 66 - 70 | 50 - 80 | 55 - 69 |
| Al₂O₃ | > 19,8 - 23 | 12 - 30 | 19 - 25 |
| Li₂O | 3 - 4 | 1 - 6 | 3 - 4,5 |
| MgO | 0 - 1,5 | 0 - 5 | 0-2,0 |
| ZnO | 1 - 2,2 | 0 - 5 | 0 - 2,5 |
| BaO | 0 - 2,5 | 0 - 8 | 0 - 2,5 |
| Na₂O | 0 - 1 | 0 - 5 | 0 - 1,5 |
| K₂O | 0 - 0,6 | 0 - 5 | 0 - 1,5 |
| TiO₂ | 2 - 3 | 0 - 8 | 1 - 3 |
| ZrO₂ | 0,5 - 2 | 0 - 7 | 1 - 2,5 |
| P₂O₅ | 0 - 1 | 0 - 7 | - |
| Sb₂O₃ | - | 0 - 4 | - |
| As₂O₃ | - | 0 - 2 | - |
| CaO | 0 - 0,5 | 0 | 0 - 1,5 |
| SrO | 0 - 1 | 0 | 0 - 1,5 |
| Nd₂O₃ | - | - | 0,004 - 0,4 |
| B₂O₃ | - | - | 0 - 1 |
| SnO₂ | - | - | 0 - 0,4 |
| Quelle | EP 1 170 264 B1 Ansprüche 14 - 18 | JP 2004-193050 A | EP 1 837 314 A1 |

Die Glaskeramiken enthalten mindestens eines der folgenden Läutermittel: As₂O₃, Sb₂O₃, SnO₂, CeO₂, Sulfat- oder Chlorid-Verbindungen.

Geeignet sind auch gewalzte oder gefloatete Glasplatten aus Alumosilicat-Glas, aus Kalk-Natron-Glas, aus Borosilicat-Glas oder aus Erdalkali-Silikat-Glas, insbesondere, wenn die Platten chemisch oder thermisch (wie z.B. in EP 1 414 762 B1 beschrieben) vorgespannt sind.

Die Alkylsilicatfarben sind neben der Anwendung für Displaybereiche von Kochflächen auch für Displaybereiche in Bedienblenden oder andere Anwendungen, bei denen Glas- oder Glaskeramikplatten thermisch nicht höher als 200 °C belastetet werden, geeignet.

In einem ersten Ausführungsbeispiel (graue Displayschicht) wird von einer beidseitig glatten, farblosen Glaskeramikplatte (1), ca. 60 cm breit, 80 cm lang und 4 mm dick, mit der Zusammensetzung gemäß EP 1 837 314 A1 (Tab.1) ausgegangen, die oberseitig mit einer keramischen Dekorfarbe (6) gemäß DE 197 21 737 C1 in einem Punktraster, das im Displaybereich (3) ausgespart wurde, beschichtet und keramisiert wurde.

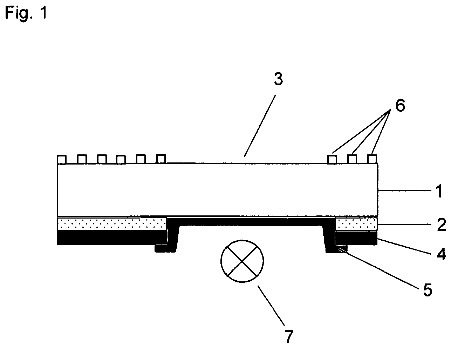

Wie in Fig.1 gezeigt, wurde anschließend auf die Unterseite der keramisierten Glaskeramikplatte (1) eine erste, farbgebende und blickdichte Farblage (2) aus einer Sol-Gel-Farbe mit der Zusammensetzung (A) gemäß Tab.2 durch Siebdruck (Siebgewebe 54 - 64) vollflächig, jedoch unter Aussparung des Displaybereichs, aufgebracht.

Die farbgebende Beschichtung (2) wurde bei 100 °C 1 Std. getrocknet und bei 300 °C 8 Std. eingebrannt. Anschließend wurde eine weitere Sol-Gel-Farbe (4) als zweite Farblage (Deckschicht) auf die erste Farblage (2) gedruckt (ebenfalls Siebweite 54 - 64) und bei 150 °C 30 min getrocknet, um Eigenschaften wie eine hohe Kratzfestigkeit sowie Dichtigkeit gegenüber Wasser und Öl zu erreichen. Einzelheiten über die unterseitige Beschichtung von Glaskeramik-Kochflächen mit farbgebenden, blickdichten Sol-Gel-Schichten können DE 103 55 160 B4 entnommen werden.

In den ausgesparten Displaybereich (3) wurde nun eine Alkylsilicat-Farbe mit der Zusammensetzung (B), Tab.2, durch Siebdruck (Siebgewebe 100 - 40) aufgetragen, wobei die Displayschicht (5) etwa 1 mm mit der umgebenden Beschichtung überlappt. Die Displayschicht (5) wurde 30 min bei 150 °C getrocknet.

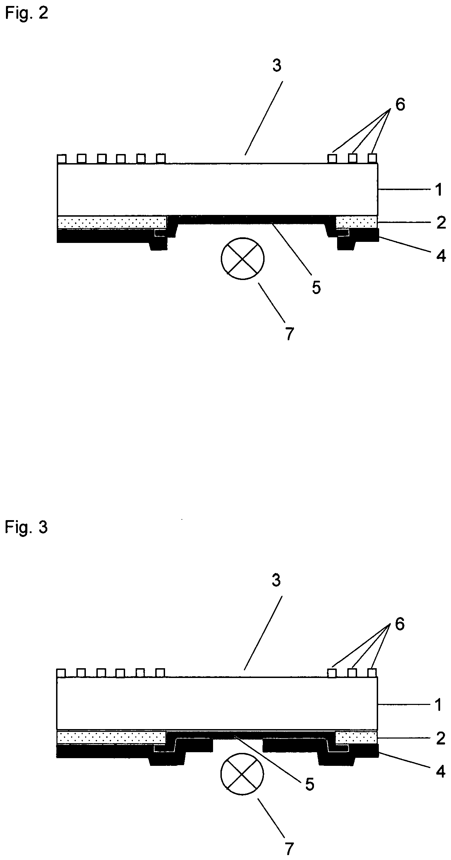

In einer weiteren Ausführungsform kann die Reihenfolge, in der die Displayschicht (5) und die Deckschicht (4) aufgetragen werden, auch umgekehrt werden: Die Displayschicht (5) wird dann nach dem Einbrand der farbgebenden Schicht (2) im Displaybereich (3) aufgebracht und die Deckschicht (4), mit Aussparung im Displaybereich, auf die getrocknete Displayschicht (5), wie in Fig.2 gezeigt.

Eine Weiterentwicklung dieser Ausführungsform ist in Fig.3 dargestellt, wo die Deckschicht (4) bis in den Displaybereich (3) hineinreicht und lediglich einzelne, kleine Bereiche, z.B. unmittelbar über den Leuchtmitteln (7), frei bleiben. Der Vorteil dieser Ausführungsform ist, dass selbst bei extrem starker Beleuchtung des Kochfeldes (z.B. durch Halogenstrahler moderner Dunstabzugshauben) im Displaybereich (3) nicht in die Kochmulde gesehen werden kann, weil die Deckschicht (4) die Transmission - mit Ausnahme bestimmter Bereiche (z.B. direkt über LEDs) - auf unter 2 % erniedrigt.

Als Sol wurde ein sauer eingestelltes Gemisch aus Methyltriethoxysilan und Tetraethoxysilan in Butylcarbitolacetat und Ethanol verwendet. Der Feststoffgehalt des Sols betrug 47,5 %.

Zusammensetzung (B) wurde erhalten, indem der Pigmentanteil der Zusammensetzung (A) auf 62 % reduziert wurde (bezogen auf die Zusammensetzungen der eingebrannten Schichten) und indem die Viskosität der Druckfarbe durch Erniedrigung des Ethylenglycol- und Erhöhung des Kieselsäuregehalts eingestellt wurde (Tab.2 u. Tab.3).

**Tab.2: Zusammensetzung der Druckfarben**

| Farbkomponente | Zusammensetzun in Gew.-% | |
|---|---|---|
| | A (farbgebende Schicht) | B (Displayschicht) |
| Sol | 62,6 | 75,6 |
| Iriodin 111 (Fa. Merck) | 18,9 | 11,2 |
| Graphit (Fa. Luh) | 6,0 | 3,5 |
| Kieselsäure HDK N20 (Fa. Wacker) | 2,3 | 3,6 |
| Ethylenglycol | 9,9 | 5,8 |
| Entschäumer Mittel S (Fa. Schwegmann) | 0,3 | 0,3 |

**Tab.3 Zusammensetzung der eingebrannten Schichten**

| Schicht-Komponente | Zusammensetzung in Gew.-% | |
|---|---|---|
| | A (farbgebende Schicht) | B (Displayschicht) |
| Bindemittel | 52,3 | 66,3 |
| Iriodin 111 | 33,2 | 20,6 |
| Graphit | 10,5 | 6,5 |
| Kieselsäure | 4,0 | 6,6 |

Dadurch, dass die Displayschicht in einem separaten (zweiten oder dritten) Druckschritt in den vorgesehenen, ausgesparten Bereich aufgetragen wird, kann der Farbton der Displayschicht unabhängig von der umgebenden, farbgebenden Schicht gewählt werden. Die Schichtdicke der farbgebenden Schicht und der Deckschicht beträgt insgesamt 35,4 ± 3,0 µm. Die Schichtdicke der Displayschicht beträgt 9,3 ± 1,2 µm. Die Displayschicht konnte problemlos (ohne unbedruckte Bereiche an den Kanten) in den ausgesparten Bereich gedruckt werden.

Weil ausgehend von der farbgebenden Schicht (Zusammensetzung [A]) die Rezeptur der Displayschicht (Zusammensetzung [B]) durch Verringerung des Pigmentanteils unter Beibehalten der Pigmentverhältnisses (Iriodin : Graphit = 3,2 : 1) hergestellt wurde, ist der Farbton der Displayschicht vergleichbar mit dem Farbton der farbgebenden Schicht.

Die Farbwerte der beiden korrespondierenden Schichten sind in Tab.4 aufgeführt. Sie wurden mit einem Spektralphotometer (Mercury 2000, Fa. Datacolor) aus Sicht des Benutzers, d.h., durch das Substrat hindurch aufgenommen (Lichtart: D65, Beobachtungswinkel: 10 °). Die Displayschicht wurde dabei zum einen mit der Weißkachel, zum anderen mit der Schwarzfalle als Hintergrund gemessen. Die Angabe der Farbwerte erfolgt nach dem CIELAB-System (DIN 5033, Teil 3 "Farbmaßzahlen"). Gemäß DIN 6174 beträgt der Farbunterschied ΔE = 2,2 (weißer Hintergrund) und ΔE = 4,5 (schwarzer Hintergrund).

Die Abhängigkeit der Farben von dem Hintergrund ist anhand der Messwerte deutlich erkennbar. Der Unterschied zwischen den Farbtönen (Displayschicht/farbgebende Schicht) beruht im wesentlichen auf Unterschieden im L*-Wert (Helligkeit), d.h., dem Hintergrund und war zu erwarten, weil die Displayschicht nicht vollkommen blickdicht, sondern noch etwas transparent ist und dieselben Pigmente in demselben Verhältnis wie die farbgebende Schicht enthält. Wie die geringen Unterschiede der Werte a* und b* (Bunttöne) zeigen, sind die farbgebende Schicht und die Displayschicht in Bezug auf ihre Buntheit annähernd vergleichbar (|Δa*| ≤ 0,4, |Δb*| ≤ 1,4). Man könnte auch sagen, dass die Displayschicht und die farbgebende Schicht den gleichen Farbton in unterschiedlicher Helligkeit haben. Bei der Prüfung mit dem normalsichtigen Auge wird der Farbunterschied daher nur als gering bzw. angenehm wahrgenommen.

Die Auffälligkeit des Farbübergangs von der Displayschicht zu der umgebenden Schicht (farbgebende Schicht oder Deckschicht) kann noch weiter verringert werden, indem die Kochflächenoberseite an der Stelle des Übergangs mit der o.g. keramischen Farbe beschichtet wird (mit beispielsweise Linien, Punkten, Symbolen oder Schriftzügen).

**Tab.4: Farbwerte der Displayschicht und der farbgebenden Schicht**

| Probe | Farbwerte | | | |
|---|---|---|---|---|
| | L* | a* | b* | ΔE |
| farbgebende Schicht mit Zusammensetzung (A) | 60,0 | -1,24 | 2,36 | Referenz |
| Displayschicht mit Zusammensetzung (B), weißer Hintergrund | 61,6 | -0,85 | 3,79 | 2,2 |
| Displayschicht mit Zusammensetzung (B), schwarzer Hintergrund | 55,7 | -1,64 | 1,44 | 4,5 |

Die Transmission Tᵥᵢₛ der Displayschicht (gemessen durch das Glaskeramiksubstrat hindurch) liegt bei 12,6 %. Fig.4 zeigt die Transmissionkurve der unbeschichteten und der im Displaybereich beschichteten Glaskeramik.

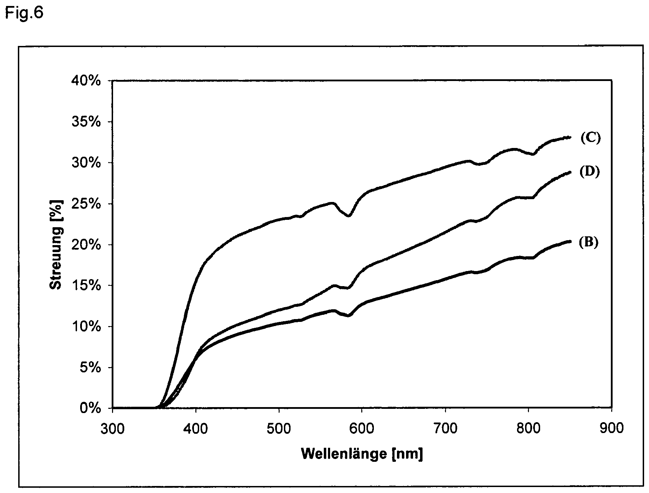

Die Streuung der Displayschicht, die mit demselben Verfahren wie in EP 1 867 613 A1 bestimmt wurde, liegt üblicherweise bei 6 - 18 %, in besonderen Fällen bei nur 3 - 12 %. Fig.6 zeigt den Verlauf der Streuung der Glaskeramik, die mit Displayschichten der Zusammensetzung B bis F beschichtet ist im relevanten Wellenlängenbereich von 400 - 800 nm.

Die Kochfläche wurde in eine Kochmulde eingebaut und unter praxisrelevanten Bedingungen (bei Beleuchtung unter gängigen Dunstabzugshauben) geprüft, ob die eingeschaltete Leuchtanzeige (7-Segment-Anzeige eines Touch Control-Bedienfeldes von E.G.O.) ausreichend erkennbar ist. Da die derzeit üblichen Leuchtelemente der Anzeige aus einem Abstand von 60 - 80 cm deutlich erkennbar sind (d.h., ausreichend scharf und hell genug durch die beschichtete Glaskeramik hindurchscheinen), sind die Streuung und die Transmission der Displayschicht ausreichend. Bei ausgeschalteter Leuchtanzeige wurde unter denselben Beleuchtungsbedingungen geprüft, ob durch die Displayschicht hindurch das Touch Control-Bedienfeld erkannt werden kann. Da das Bedienfeld im ausgeschalteten Zustand nicht erkennbar war, schränkt die Displayschicht die Sicht in die Kochmulde ausreichend stark ein.

Da die Displayschicht keine Edelmetalle enthält, ist sie deutlich preisgünstiger als Beschichtungen auf Basis von Edelmetallpräparaten.

Die Kratzfestigkeit der Beschichtung beträgt 200 g und liegt damit mehr als doppelt so hoch wie bei herkömmlichen Displayschichten mit Siliconharzen als Filmbildner. Die Messung der Kratzfestigkeit wurde durchgeführt, indem die mit dem jeweiligen Gewicht (100 g, 200 g, 300 g) belastete Hartmetallspitze (Spitzenradius: 0,5 mm) senkrecht auf die Beschichtung aufgesetzt und ca. 30 cm weit mit einer Geschwindigkeit von 20 - 30 cm/s über die Beschichtung geführt wurde. Die Bewertung erfolgte aus Sicht des Benutzers durch die Glaskeramik hindurch. Der Test gilt bei der gewählten Belastung als bestanden, wenn aus einem Abstand von 60 - 80 cm bei weißem Hintergrund und Tageslicht D65 kein Schaden erkennbar ist.

Da die Displayschicht nur einen geringfügigen Anteil eines elektrisch leitfähigen Pigments enthält (6,5 Gew.-% Graphit bezogen auf die eingebrannte Schicht), ist die Beschichtung geeignet für kapazitive Berührungsschalter. Die Prüfung erfolgte mit Hilfe des o.g. Touch-Control-Bedienfelds von E.G.O. Über die kapazitiven Berührungsschalter der Einheit konnten die Kochzonen problemlos geschaltet werden. Denn der elektrische Flächenwiderstand der Beschichtung liegt bei über 20 GΩ/Quadrat (20 °C).

Der Flächenwiderstand kann relativ einfach mit einem Ohmmeter bestimmt werden, indem die beiden Elektroden des Messgeräts möglichst nahe beieinander (mit ca. 0,5 - 1 mm Abstand) auf die Beschichtung aufgesetzt werden. Der vom Messgerät angezeigte Widerstand entspricht in etwa dem Flächenwiderstand der Beschichtung.

Die Displayschicht der Zusammensetzung (B) ist nicht geeignet für Infrarot-Berührungsschalter, weil die Transmission im nahen Infrarotbereich (bei 940 nm) unter 25 % liegt, wie in Fig.4 gezeigt.

Beispiel 2 erzeugt hellgraue, beige, dunkelgraue und beigegraue Displayschichten.
Die in Beispiel 1 verwendete Displayfarbe kann durch die Zusammensetzungen (C - F), Tab.5, ersetzt werden, wodurch eine große Vielfalt an Farben mit unterschiedlichen Transparenzgraden und erhöhter Kratzfestigkeit möglich ist.

**Tab.5: Farbzusammensetzungen weiterer Displayfarben**

| Farbkomponente | Zusammensetzung in Gew.-% | | | |
|---|---|---|---|---|
| | C (hellgrau) | D (beige) | E (dunkelgrau) | F (beigegrau) |
| Sol | 82,8 | 69,0 | 66,9 | 64,3 |
| Iriodin 111 (Fa. Merck) | 4,7 | 14,2 | - | 4,9 |
| Iriodin 103 (Fa. Merck) | - | 4,6 | 14,0 | 14,2 |
| Iriodin 323 (Fa. Merck) | - | - | 2,0 | 2,9 |
| Graphit (Fa. Luh) | 1,5 | 1,9 | 4,6 | 1,8 |
| Kieselsäure HDK N20 (Fa. Wacker) | 4,5 | 3,0 | 2,7 | 2,3 |
| Ethylenglycol | 6,3 | 7,0 | 9,5 | 9,3 |
| Entschäumer Mittel S (Fa. Schwegmann) | 0,2 | 0,3 | 0,3 | 0,3 |

Zusammensetzung C ist eine transparentere Variante von Zusammensetzung B. Gedruckt mit Siebgewebe 140 - 31 wird eine Displayschicht mit einer Transmission Tᵥᵢₛ von 32,8 % (Abb.4) und einer Schichtdicke von 5,7 ± 0,4 µm erhalten. Die Kratzfestigkeit beträgt 100 g. Im Gegensatz zu Zusammensetzung B ist Zusammensetzung C geeignet für IR-Touch Sensoren, weil die Transmission bei 940 nm bei über 30 % liegt.

Tab.6 zeigt die Zusammensetzungen der eingebrannten Displayschichten. Die Eigenschaften der Displayschichten sind in Tab.7 zusammengefaßt. Bemerkenswert bei Zusammensetzung D ist, daß trotz geringer Transmission im Bereich des sichtbaren Lichts im Infrarot-Bereich (bei 940 nm) die Transmission ausreichend für Infrarot-Berührungsschalter ist.

**Tab.6: Zusammensetzung der eingebrannten Displayschichten**

| Schicht-Komponente | Zusammensetzung in Gew.-% | | | |
|---|---|---|---|---|
| | C (hellgrau) | D (beige) | E (dunkelgrau) | F (beigegrau) |
| Bindemittel | 78,5 | 58,1 | 57,7 | 53,9 |
| Iriodin 111 | 9,5 | 25,3 | - | 8,5 |
| Iriodin 103 | - | 8,1 | 25,5 | 25,4 |
| Iriodin 323 | - | - | 3,6 | 5,1 |
| Graphit | 3,0 | 3,3 | 8,4 | 3,1 |
| Kieselsäure | 9,0 | 5,2 | 4,9 | 4,0 |

**Tab. 7: Eigenschaften der Displayschichten**

| Eigenschaft | | Zusammensetzung | | | | |
|---|---|---|---|---|---|---|
| | | B (hellgrau) | C (hellgrau) | D (beige) | E (dunkelgrau) | F (beigegrau) |
| Schichtdicke (Siebgewebe) | | 9,3 ± 1,2 µm (100-40) | 5,7 ± 0,4 µm (140-31) | 7,5 ± 0,8 µm (140-31) | 8,3 ± 1,3 µm (100-40) | 7,3 ± 0,3 µm (100-40) |
| Transmission Tᵥᵢₛ | | 12,6 % | 32,8 % | 17,1 % | 13,4 % | 19,5 % |
| Transmission bei 940 nm | | 23,6 % | 45,4 % | 38,7 % | 20,1 % | 34,2 % |
| Eignung für IR-Touch Sensoren | | nein | ja | ja | nein | ja |
| Eignung für kapazitive Sensoren | | ja | ja | ja | ja | ja |
| Kratzfestiqkeit | | 200 g | 100 g | 100 g | 200 g | 100 g |
| Farbwerte (Messung durch Glaskeramik hindurch. Schicht mit WeißKachel hinterlegt) | L* | 61,6 | 62,8 | 67,2 | 60,1 | 68,5 |
| | a* | -0,85 | 0,44 | 0,52 | -0,28 | 0,18 |
| | b* | 3,79 | 4,64 | 4,72 | 4,08 | 9,29 |
| Sicht in Kochmulde ausreichend vermindert | | ja | ja | ja | ja | ja |
| ausreichend durchlässig für Leuchtanzeigen | | ja | ja | ja | ja | ja |
| Streuung bei 400 nm | | 6 % | 16 % | 6 % | 3,8 % | 6,8 % |
| Streuung bei 800 nm | | 18 % | 31 % | 26 % | 11,8 % | 25,2 % |

## Patentansprüche

1. Ein Beschichtungssystem, umfassend:
eine transparente Beschichtung für Anzeigebereiche von flächig beschichteten Glas- oder Glaskeramik-Scheiben, und
eine flächige, nicht-transparente Beschichtung;
wobei die transparente Beschichtung durch folgende Verfahrensschritte erhältlich ist:
i) Aufbringen der transparenten Beschichtung in Aussparungen der flächigen, nicht-transparenten Beschichtung als Sol-Gel-Farbe mit Alkylsilicaten als Filmbildner, und
ii) Bilden der transparenten Beschichtung durch eine thermische Behandlung der aufgebrachten Farbe bei kleiner oder gleich 200 °C;
wobei die aus dem Filmbildner durch thermische Behandlung entstandene Beschichtung über die reaktiven Gruppen der Alkylsilicate vernetzt ist und direkt an das Silicium gebundene, organische, nicht hydrolysierbare Reste aufweist.

2. Das Beschichtungssystem nach Anspruch 1,
**dadurch gekennzeichnet,**
**dass** die Farbe, aus der die Beschichtung gebildet wird, Filmbildner, Lösungsmittel, Pigmente und Füllstoffe enthält.

3. Das Beschichtungssystem nach Anspruch 1 oder 2,
**dadurch gekennzeichnet,**
**dass** die Farbe als Filmbildner Alkylsilicate, insbesondere Ester der Orthokieselsäure oder Ester von Polykieselsäuren enthält.

4. Das Beschichtungssystem nach einem der Ansprüche 1 bis 3,
**dadurch gekennzeichnet,**
**dass** die Farbe als Lösungsmittel schwerflüchtige, hochsiedende organische Verbindungen mit einer Verdunstungszahl VD über 35 und einem Siedepunkt über 120 °C enthält.

5. Das Beschichtungssystem nach Anspruch 4,
**dadurch gekennzeichnet,**
**dass** die Farbe als Lösungsmittel Butylcarbitolacetat, Terpineol, Methoxypropanol, Butylglycol oder Butyldiglycol enthält.

6. Das Beschichtungssystem nach Anspruch 4 oder 5,
**dadurch gekennzeichnet,**
**dass** der Anteil an leichtflüchtigen Lösungsmitteln (VD ≤ 35) in der Farbe geringer ist, als der an schwerflüchtigen Lösungsmitteln.

7. Das Beschichtungssystem nach einem der Ansprüche 1 bis 6,
**dadurch gekennzeichnet,**
**dass** das aus Filmbildner und Lösungsmittel gebildete Sol 30 - 60 Gew.-% filmbildende vorkondensierte Organosilane und 70 - 40 Gew.-% Lösungsmittel enthält.

8. Das Beschichtungssystem nach einem der Ansprüche 1 bis 7,
**dadurch gekennzeichnet,**
**dass** die Farbe anorganische und/oder organische Pigmente enthält.

9. Das Beschichtungssystem nach Anspruch 8,
**dadurch gekennzeichnet,**
**dass** der Pigmentanteil nach der thermischen Behandlung der Farbe in der Beschichtung 2 - 45 Gew.-%, insbesondere 25 - 40 Gew.-% beträgt.

10. Das Beschichtungssystem nach Anspruch 8 oder 9,
**dadurch gekennzeichnet,**
**dass** als anorganische Pigmente Buntpigmente, Schwarzpigmente, Eisenoxidpigmente, Chromoxidpigmente oder oxidische Mischphasenpigmente mit Rutil- oder Spinellstruktur oder Weißpigmente (Oxide, Carbonate, Sulfide) und als organische Pigmente Azopigmente, polycyclische Pigmente oder Metallkomplexpigmente in der Farbe enthalten sind.

11. Das Beschichtungssystem nach einem der Ansprüche 8 bis 10,
**dadurch gekennzeichnet,**
**dass** der mittlere Teilchendurchmesser der Pigmente im Bereich von 1 - 25 µm, insbesondere von 5 - 10 µm liegt.

12. Das Beschichtungssystem nach einem der Ansprüche 1 bis 11,
**dadurch gekennzeichnet,**
**dass** die Farbe durch Sprühen, Tauchen, Gießen, Aufstreichen, Siebdrucken, Tampondruck oder andere Stempelverfahren aufgebracht ist.

13. Das Beschichtungssystem nach einem der Ansprüche 1 bis 12,
**dadurch gekennzeichnet,**
**dass** die Beschichtung nach der thermischen Behandlung Schichtdicken im Bereich von 2 - 20 µm, insbesondere von 5 - 12 µm aufweist.

14. Das Beschichtungssystem nach einem der Ansprüche 1 bis 13,
**dadurch gekennzeichnet,**
**dass** die transparente Beschichtung, bei unterschiedlichen Schichtdicken der Beschichtungen, in vertieften Aussparungen der flächigen, nicht transparenten Beschichtung angeordnet ist.

15. Das Beschichtungssystem nach einem der Ansprüche 1 bis 14,
**dadurch gekennzeichnet,**
**dass** die transparente Beschichtung überlappend über der flächigen, nicht transparenten Beschichtung angeordnet ist.

16. Das Beschichtungssystem nach Anspruch 15,
**dadurch gekennzeichnet,**
**dass** die Überlappung 1-5 mm beträgt.

17. Das Beschichtungssystem nach einem der Ansprüche 1 bis 16,
**dadurch gekennzeichnet,**
**dass** die transparente Beschichtung ihrerseits wieder von einer weiteren Deckschicht, die über der flächigen, nicht transparenten Beschichtung angeordnet ist, überlappt wird.

18. Das Beschichtungssystem nach einem der Ansprüche 1 bis 17,
**dadurch gekennzeichnet,**
**dass** die transparente Beschichtung der flächigen, nicht-transparenten farbgebenden Beschichtung in den Komponenten ihrer Zusammensetzung entspricht.

19. Verfahren zur Herstellung eines Beschichtungssystems nach einem der Ansprüche 1 bis 18,
**dadurch gekennzeichnet,**
**dass** die transparente Beschichtung in Aussparungen der flächigen, nicht transparenten Beschichtung als Sol-Gel-Farbe mit Alkylsilicaten als Filmbildner aufgebracht wird, wobei die Bildung der transparenten Beschichtung durch eine thermische Behandlung der aufgebrachten Farbe bei kleiner oder gleich 200 °C erfolgt.

20. Verwendung des Beschichtungssystems nach einem der Ansprüche 1 bis 18 für Kochflächen, Backofentüren, Bedienblenden und Displaybereiche.

## Claims

1. Coating system comprising:
a transparent coating for display regions of glass or glass-ceramic plates which are coated over their area, and
a two-dimensional non-transparent coating;
wherein the transparent coating is obtainable by the following process steps:
i) applying the transparent coating in recesses of the two-dimensional non-transparent coating as a sol-gel paint having alkyl silicates as film former, and
ii) forming the transparent coating by a thermal treatment of the paint applied at less than or equal to 200°C;
wherein the coating formed from the film former by thermal treatment is crosslinked via the reactive groups of the alkyl silicates and has organic, non-hydrolysable radicals bound directly to the silicon.

2. Coating system according to Claim 1,
**characterized in that**
the paint from which the coating is formed contains film formers, solvents, pigments and fillers.

3. Coating system according to Claim 1 or 2,
**characterized in that**
the paint contains alkyl silicates, in particular esters of orthosilicic acid or esters of polysilicic acids, as film formers.

4. Coating system according to any of Claims 1 to 3,
**characterized in that**
the paint contains relatively non-volatile, high-boiling organic compounds having an evaporation number EN above 35 and a boiling point above 120°C as solvents.

5. Coating system according to Claim 4,
**characterized in that**
the paint contains butyl carbitol acetate, terpineol, methoxypropanol, butyl glycol or butyl diglycol as solvents.

6. Coating system according to Claim 4 or 5,
**characterized in that**
the proportion of volatile solvents (EN ≤ 35) in the paint is lower than that of relatively non-volatile solvents.

7. Coating system according to any of Claims 1 to 6,
**characterized in that**
the sol formed by film formers and solvents contains 30-60% by weight of film-forming precondensed organosilanes and 70-40% by weight of solvents.

8. Coating system according to any of Claims 1 to 7,
**characterized in that**
the paint contains inorganic and/or organic pigments.

9. Coating system according to Claim 8,
**characterized in that**
the proportion of pigments in the coating after thermal treatment of the paint is 2-45% by weight, in particular 25-40% by weight.

10. Coating system according to Claim 8 or 9,
**characterized in that**
coloured pigments, black pigments, iron oxide pigments, chromium oxide pigments or oxidic mixed-phase pigments having a rutile or spinel structure or white pigments (oxides, carbonates, sulfides) are present in the paint as inorganic pigments, and azo pigments, polycyclic pigments or metal complex pigments as organic pigments.

11. Coating system according to any of Claims 8 to 10,
**characterized in that**
the average particle diameter of the pigments is in the range of 1-25 µm, in particular 5-10 µm.

12. Coating system according to any of Claims 1 to 11,
**characterized in that**
the paint is applied by spraying, dipping, casting, painting, screen printing, pad printing or other stamp processes.

13. Coating system according to any of Claims 1 to 12,
**characterized in that**
the coating after the thermal treatment has layer thicknesses in the range of 2-20 µm, in particular 5-12 µm.

14. Coating system according to any of Claims 1 to 13,
**characterized in that**
the transparent coating is arranged in depressions in the two-dimensional non-transparent coating, with different layer thicknesses of the coatings.

15. Coating system according to any of Claims 1 to 14,
**characterized in that**
the transparent coating overlaps the two-dimensional non-transparent coating.

16. Coating system according to Claim 15,
**characterized in that**
the overlap is 1-5 mm.

17. Coating system according to any of Claims 1 to 16,
**characterized in that**
the transparent coating is in turn overlapped again by a further covering layer arranged on top of the two-dimensional non-transparent coating.

18. Coating system according to any of Claims 1 to 17,
**characterized in that**
the transparent coating corresponds in terms of the components of its composition to the two-dimensional non-transparent colour-imparting coating.

19. Process for producing a transparent coating according to any of Claims 1 to 18,
**characterized in that**
the transparent coating is applied as sol-gel paint having alkyl silicates as film formers in recesses in the two-dimensional non-transparent coating, wherein the formation of the transparent coating is effected by means of a thermal treatment of the applied paint at less than or equal to 200°C.

20. Use of the coating system according to any of Claims 1 to 18 for cooking surfaces, oven doors, operating panels and display regions.

## Revendications

1. Système de revêtement, comprenant :
un revêtement transparent pour des zones d'affichage de plaques de verre ou de vitrocéramique revêtues à plat, et
un revêtement non transparent, plat ;
le revêtement transparent pouvant être obtenu par les étapes de procédé suivantes :
i) l'application du revêtement transparent dans des évidements du revêtement non transparent plat sous la forme d'une encre sol-gel munie de silicates d'alkyle en tant qu'agents filmogènes, et
ii) la formation du revêtement transparent par un traitement thermique de l'encre appliquée à une température inférieure ou égale à 200 °C ;
le revêtement formé à partir de l'agent filmogène par traitement thermique étant réticulé par l'intermédiaire des groupes réactifs des silicates d'alkyle et comprenant des radicaux non hydrolysables, organiques, reliés directement au silicium.

2. Système de revêtement selon la revendication 1, **caractérisé en ce que** l'encre à partir de laquelle le revêtement est formé contient des agents filmogènes, des solvants, des pigments et des charges.

3. Système de revêtement selon la revendication 1 ou 2, **caractérisé en ce que** l'encre contient en tant qu'agents filmogènes des silicates d'alkyle, notamment des esters de l'acide orthosilicique ou des esters d'acides polysiliciques.

4. Système de revêtement selon l'une quelconque des revendications 1 à 3, **caractérisé en ce que** l'encre contient en tant que solvants des composés organiques de point d'ébullition élevé, peu volatils, ayant un indice d'évaporation VD supérieur à 35 et un point d'ébullition supérieur à 120 °C.

5. Système de revêtement selon la revendication 4, **caractérisé en ce que** l'encre contient en tant que solvants de l'acétate de butylcarbitol, du terpinéol, du méthoxypropanol, du butylglycol ou du butyldiglycol.

6. Système de revêtement selon la revendication 4 ou 5, **caractérisé en ce que** la proportion de solvants volatils (VD ≤ 35) dans l'encre est inférieure à celle de solvants peu volatils.

7. Système de revêtement selon l'une quelconque des revendications 1 à 6, **caractérisé en ce que** le sol formé à partir d'agents filmogènes et de solvants contient 30 à 60 % en poids d'organosilanes précondensés filmogènes et 70 à 40 % en poids de solvants.

8. Système de revêtement selon l'une quelconque des revendications 1 à 7, **caractérisé en ce que** l'encre contient des pigments inorganiques et/ou organiques.

9. Système de revêtement selon la revendication 8, **caractérisé en ce que** la proportion de pigment après le traitement thermique de l'encre dans le revêtement est de 2 à 45 % en poids, notamment de 25 à 40 % en poids.

10. Système de revêtement selon la revendication 8 ou 9, **caractérisé en ce que** des pigments colorés, des pigments noirs, des pigments d'oxyde de fer, des pigments d'oxyde de chrome ou des pigments oxydiques à phases mixtes à structure rutile ou spinelle ou des pigments blancs (oxydes, carbonates, sulfures) sont contenus dans l'encre en tant que pigments inorganiques et des pigments azoïques, des pigments polycycliques ou des pigments de complexes métalliques sont contenus dans l'encre en tant que pigments organiques.

11. Système de revêtement selon l'une quelconque des revendications 8 à 10, **caractérisé en ce que** le diamètre de particule moyen des pigments se situe dans la plage allant de 1 à 25 µm, notamment de 5 à 10 µm.

12. Système de revêtement selon l'une quelconque des revendications 1 à 11, **caractérisé en ce que** l'encre est appliquée par pulvérisation, immersion, coulée, enduction, sérigraphie, impression au tampon ou d'autres procédés de poinçonnage.

13. Système de revêtement selon l'une quelconque des revendications 1 à 12, **caractérisé en ce que** le revêtement présente après le traitement thermique des épaisseurs de couche dans la plage allant de 2 à 20 µm, notamment de 5 à 12 µm.

14. Système de revêtement selon l'une quelconque des revendications 1 à 13, **caractérisé en ce qu'**en cas d'épaisseurs de couche différente des revêtements, le revêtement transparent est agencé dans des évidements en retrait du revêtement non transparent plat.

15. Système de revêtement selon l'une quelconque des revendications 1 à 14, **caractérisé en ce que** le revêtement transparent est agencé en chevauchement au-dessus du revêtement non transparent plat.

16. Système de revêtement selon la revendication 15, **caractérisé en ce que** le chevauchement est de 1 à 5 mm.

17. Système de revêtement selon l'une quelconque des revendications 1 à 16, **caractérisé en ce que** le revêtement transparent est lui-même de nouveau chevauché par une couche de recouvrement supplémentaire, qui est agencée au-dessus du revêtement non transparent plat.

18. Système de revêtement selon l'une quelconque des revendications 1 à 17, **caractérisé en ce que** le revêtement transparent correspond au revêtement colorant non transparent plat en termes des composants de leur composition.

19. Procédé de fabrication d'un système de revêtement selon l'une quelconque des revendications 1 à 18, **caractérisé en ce que** le revêtement transparent est appliqué dans des évidements du revêtement non transparent plat sous la forme d'une encre sol-gel munie de silicates d'alkyle en tant qu'agents filmogènes, la formation du revêtement transparent ayant lieu par un traitement thermique de l'encre appliquée à une température inférieure ou égale à 200 °C.

20. Utilisation du système de revêtement selon l'une quelconque des revendications 1 à 18 pour des surfaces de cuisson, des portes de fours de cuisson, des bandeaux de commande et des zones d'affichage.
